# EUROPÄISCHE PATENTSCHRIFT

(11) **EP 0 554 554 B1**
(45) Veröffentlichungstag und Bekanntmachung des Hinweises auf die Patenterteilung: **25.10.1995**
(21) Anmeldenummer: 92121553.9
(22) Anmeldetag: 18.12.1992
(51) Int. Cl.: F02F 11/00, B23P 11/00

(54) **Deckel für Brennkraftmaschine**
Engine valve cover
Couvre culbuteur pour moteur

(30) Priorität: 01.02.1992 DE 4202860
(43) Veröffentlichungstag der Anmeldung: 11.08.1993
(73) Patentinhaber: CR Elastomere GmbH, D-51379 Leverkusen-Opladen (DE)
(72) Erfinder: Quentin, Werner, Dipl.-Ing., W-5093 Burscheid (DE); Stephan, Bernd, Dipl.-Ing., W-5630 Remscheid 11 (DE)

(56) Entgegenhaltungen:
- EP-A- 0 208 460
- FR-A- 1 535 623

## Beschreibung

Die Erfindung betrifft einen Deckel, insbesondere für den Zylinderkopf einer Brennkraftmaschine, mit einer eine hinterschnittene umlaufende Nut aufweisende Dichtungsfläche zur Aufnahme einer elastischen Dichtung.

Dünnwandige Deckel für Brennkraftmaschinen, wie beispielsweise der Ventildeckel für den Zylinderkopf, weisen elastische Dichtungen zur statischen Abdichtung auf. Die Dichtungen sind entweder kraftschlüssig mittels eines Haftvermittlers in einer Nut der Dichtungsfläche anvulkanisiert oder aber lose als getrennt von dem Deckel eingelegte Dichtungen ausgeführt.

Die DE-PS 36 39 218 offenbart einen Ventildeckel mit anvulkanisierter Dichtung. Die Dichtung wurde unter Zwischenschaltung eines Haftvermittlers im thermisch erweichten Zustand an die Dichtungsfläche angespritzt. Diese Art von kraftschlüssiger Verbindung zwischen Dichtung und Deckel ist zum einen kostspielig in der Herstellung, zum anderen lassen sich beide Teile nur schwer voneinander lösen, so daß beim Auftreten von Fehlern während des Herstellungsprozesses der Deckel als Ausschuß keine Verwendung mehr findet. Im Reparaturfall muß der komplette Deckel erneuert werden, da die Dichtung sich nicht ohne weiteres von dem Deckel lösen läßt. Im modernen Maschinenbau ist der Konstrukteur gehalten, im Hinblick auf knappe Rohstoffreserven, dafür Sorge zu tragen, daß möglichst viele Teile wiederverwendet werden.

Die FR-PS 10 35 878 wird diesem Problem eher gerecht, indem ein vorgefertigter Dichtungsring in eine hinterschnittene Nut eingelegt wird. Die Herstellung des Deckels als auch der Dichtung ist aber aufwendig, da die Dichtung in einem separaten Formwerkzeug hergestellt wird und in einem weiteren Arbeitsgang in die Nut eingepreßt wird; außerdem ist die Herstellung der schwalbenschwanzförmigen Nut teuer in der Herstellung.

Der Erfindung liegt die Aufgabe zugrunde, einen gattungsgemäßen Deckel im Hinblick auf den Herstellungsprozeß kostenmäßig zu optimieren, darüber hinaus wird eine lösbare Verbindung zwischen Deckel und Dichtung angestrebt, die ohne zusätzlichen Montageaufwand realisierbar ist.

Diese Aufgabe wird erfindungsgemäß dadurch gelöst, daß die Hinterschneidung der Nut durch plastisches Verformen der Nutränder erzeugt ist.

Auf diese Weise reduzieren sich die Herstellkosten des Deckels, da die Hinterschneidung nunmehr nicht mittels kostenträchtiger Gießformen geschaffen wird, sondern auf einfache Weise durch Verformung der Nutränder.

Überdies besteht die Möglichkeit, daß der Deckel das für die Ausbildung der Dichtung notwendige erste Formwerkzeugteil ist. Hierdurch kann die Dichtung in die Nut ohne Haftvermittler eingespritzt werden. Ein weiterer Vorteil ergibt sich, wenn die plastische Verformung der Nutränder durch das zweite Formwerkzeugteil erfolgt. Beim Schließvorgang im Vulkanisierwerkzeug werden die Nutränder verformt, hierdurch werden zusätzliche Kosten für separate Werkzeuge eingespart. Neben einer Reduzierung der Herstellkosten kann bei fehlerhafter Formgebung der Dichtung der Einspritzvorgang nach Entfernen der fehlerhaften Dichtung wiederholt werden.

Einem weiteren Gedanken der Erfindung gemäß weist der Deckel mehrere über den Umfang verteilt im Bereich der Nut angeordnete Durchbrechungen auf, die vom Nutgrund ausgehend sich entgegengesetzt zur Dichtung erstrecken. Durch diese Durchbrechungen lassen sich im Reparaturfall getrennt gelieferte Dichtungen in die Nut einsetzen, indem die Reparaturdichtung den Öffnungen angepaßte Noppen aufweist, die durch die Öffnungen steckbar sind, so daß durch Ziehen an den Noppen die Dichtung in die Nut einschnappt.

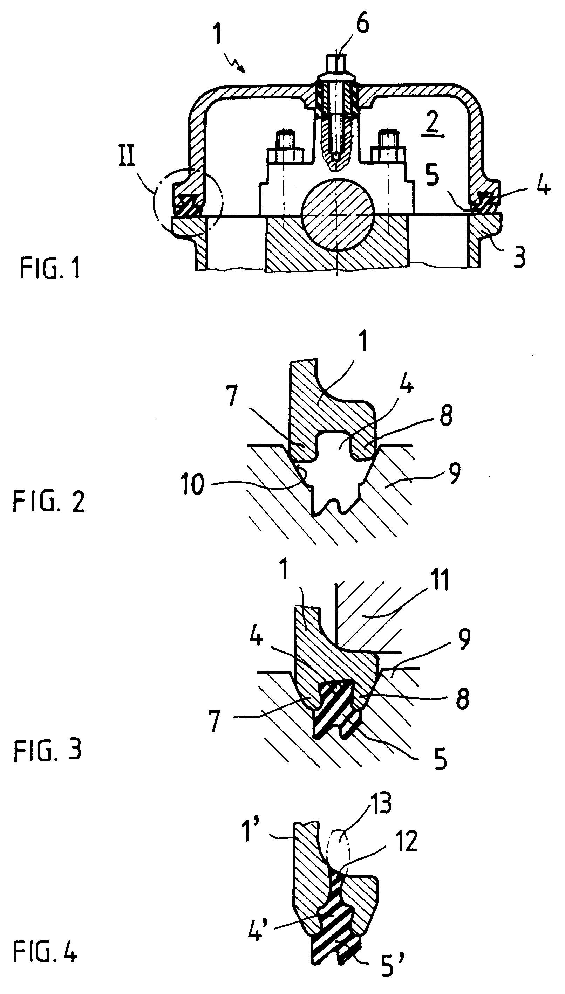

Die Erfindung ist in der Zeichnung dargestellt und wird im folgenden näher erläutert. Es zeigen:
Figur 1 Ansicht eines erfindungsgemäßen Deckels im Querschnitt im eingebauten Zustand
Figur 2 Ausschnittvergrößerung gemäß II während der plastischen Verformung
Figur 3 Ausschnitt gemäß Figur 2 nach dem Einsetzen des Dichtkörpers
Figur 4 alternative Nutform gemäß Figur 2
Der in der Figur 1 dargestellte Deckel (1) besteht aus Aluminium und dient zur Abdeckung des Ventilraumes (2) des Motorblocks (3) einer Brennkraftmaschine. Mittels mehrerer am Deckelboden angeordneter Befestigungsschrauben (6) ist der Deckel (1) fest mit dem Motorblock (3) verbunden. Die statische Abdichtung zwischen Deckel (1) und Motorblock (3) erfolgt durch die in einer umlaufenden, hinterschnittenen Nut (4) angeordneten Dichtung (5).

Erfindungsgemäß ist die Hinterschneidung der Nut (4) durch plastisches Verformen der Nutränder (7, 8) des Deckels (1) (Figur 2) erzeugt worden. Hierzu wird der Deckel (1) in das zweite Vulkanisierwerkzeugteil (9) eingepreßt. Das Vulkanisierwerkzeugteil (9) weist konisch verlaufende Einführschrägen (10) auf, die die Nutränder (7, 8) beim Eindrücken des Deckels (1) in das Werkzeugteil (9) radial nach innen pressen.

Die Figur 3 zeigt die Endlage des Deckels (1). Über eine Haltevorrichtung (11) wird der Deckel (1) im Vulkanisierwerkzeugteil (9) gehalten. In dieser Lage bildet der Deckel (1) einen Teil der Vulkanisierform.

Die durch die plastische Verformung der Nutränder (7, 8) sich ergebende schwalbenschanzförmige Nut ermöglicht die Einspritzung des Dichtkörpers (5) im thermisch erweichten Zustand, und zwar ohne Haftvermittler. Aufgrund der Hinterschneidung kann die Dichtung (5) nach der Vulkanisation nicht aus der Nut (4) herausfallen. Die auf diese Weise erzeugte formschlüssige Verbindung zwischen Deckel (1) und Dichtung (5) bietet die Möglichkeit, je nach Bedarf, die Dichtung (5) leicht wieder aus der Nut zu lösen. Damit ergibt sich nicht nur eine kostengünstige Fertigung, vielmehr wird dieser Herstellungsprozeß der heutigen Forderung nach guter Recyclingsfähigkeit gerecht.

In der Figur 4 ist ein alternativer Deckel (1') dargestellt, bei dem in der Nut (4') Durchbrechungen (12) vorgesehen sind. Die Durchbrechungen (12) schaffen die Möglichkeit, beschädigte Dichtungen (5') bei Reparaturarbeiten auszutauschen. So können beispielsweise separat hergestellte Dichtungen (5'), die mit mehreren über den Umfang verteilt angeformten Noppen (13) versehen sind, manuell in die Nut gezogen werden, indem die Noppen (13) durch die Durchbrechungen gesteckt werden, um dann durch axiales Ziehen an den Noppen (13) die Dichtung (5') in die Nut (4') zu pressen. Hierbei ist es nicht unbedingt notwendig, daß die Dichtung (5') auch eine schwalbenschanzförmige Kontur aufweist, vielmehr können auch rechteckförmige Dichtungen (5') eingesetzt werden.

## Patentansprüche

1. Deckel (1), insbesondere für den Zylinderkopf einer Brennkraftmaschine, mit einer eine hinterschnittene umlaufende Nut (4,4') aufweisenden Dichtungsfläche zur Aufnahme einer elastischen Dichtung (5), dadurch gekennzeichnet, daß die Hinterschneidung der Nut (4, 4') durch plastisches Verformen der Nutränder (7, 8) erzeugt ist.

2. Deckel nach Anspruch 1, dadurch gekennzeichnet, daß dieser das für die Ausbildung der Dichtung (5, 5') notwendige erste Formwerkzeugteil ist.

3. Deckel nach den Ansprüchen 1 und 2, dadurch gekennzeichnet, daß die plastische Verformung der Nutränder (7, 8) durch ein zweites Formwerkzeugteil (9) erfolgt.

4. Deckel nach den Ansprüchen 1 bis 3, dadurch gekennzeichnet, daß der Deckel (1') mehrere über den Umfang verteilt im Bereich der Nut (4') angeordnete Durchbrechungen (12) aufweist, die vom Nutgrund ausgehend sich entgegengesetzt zur Dichtung (5') erstrecken.

## Claims

1. Cover (1), particularly for the cylinder head of an internal combustion engine, with a seal having an undercut surrounding groove (4, 4') for receiving a resilient seal (5), characterised in that the undercut of the groove (4, 4') is produced by plastic deformation of the groove edges (7, 8).

2. Cover according to Claim 1, characterised in that said cover is the first mould tool part necessary for producing the seal (5, 5').

3. Cover according to Claims 1 and 2, characterised in that plastic deformation of the groove edges (7, 8) is effected by a second mould tool part (9).

4. Cover according to Claims 1 to 3, characterised in that the cover (1') has a plurality of openings (12) distributed around the periphery and located in the area of the groove (4'), said openings (12), starting from the groove base, extending in an opposite direction towards the seal (5').

## Revendications

1. Couvercle (1), en particulier pour la tête de cylindre d'un moteur à combustion interne, ayant une surface d'étanchéité présentant une rainure périphérique contre-dépouillée (4,4') pour la réception d'une garniture d'étanchéité élastique (5), caractérisé en ce que la contre-dépouille de la rainure (4,4') est réalisée par déformation plastique des bords de rainure (7, 8).

2. Couvercle selon la revendication 1. caractérisé en ce que celui-ci constitue la première partie d'outil de formage nécessaire pour la formation de la garniture d'étanchéité (5, 5').

3. Couvercle selon les revendications 1 et 2, caractérisé en ce que la déformation plastique des bords re rainure (7, 8) est réalisée par l'intermédiaire d'une deuxième partie (9) d'outil de formage.

4. Couvercle selon des revendications 1 à 3, caractérisé en ce que le couvercle (1') présente plusieurs ouvertures de passage (12) réparties sur la périphérie et disposées dans la zone de la rainure (4'), les ouvertures de passage s'étendant à partir du fond de la rainure en direction opposée à la garniture d'étanchéité (5').
